# EUROPÄISCHE PATENTSCHRIFT

(11) **EP 1 904 604 B1**
(45) Veröffentlichungstag und Bekanntmachung des Hinweises auf die Patenterteilung: **24.08.2011**
(21) Anmeldenummer: 06761782.9
(22) Anmeldetag: 10.07.2006
(51) Int. Cl.: C10G 1/10, C10G 1/02, C10B 53/07, C10B 47/04, C08J 11/12

(54) **VERFAHREN UND VORRICHTUNG ZUM AUFBEREITEN VON KOHLENWASSERSTOFFHALTIGEN PRODUKTEN**
METHOD AND DEVICE FOR PREPARING PRODUCTS CONTAINING HYDROCARBONS
PROCEDE ET DISPOSITIF POUR TRAITER DES PRODUITS CONTENANT DES HYDROCARBURES

(30) Priorität: 11.07.2005 DE 102005032575
(43) Veröffentlichungstag der Anmeldung: 02.04.2008
(73) Patentinhaber: Carbo Tec GmbH, 06246 Bad Lauchstädt (DE); Hasenkrug, Werner, 39128 Magdeburg (DE)
(72) Erfinder: HASENKRUG, Werner, 39128 Magdeburg (DE)
(74) Vertreter: Leinung, Günter
(86) Internationale Anmeldenummer: PCT/DE2006/001180
(87) Internationale Veröffentlichungsnummer: WO 2007/006280

(56) Entgegenhaltungen:
- EP-A2- 0 853 114
- WO-A-03/091359
- DE-A1- 10 309 530
- DE-A1- 10 348 987
- FR-A1- 2 277 137
- US-A- 5 783 046

## Beschreibung

Die Erfindung betrifft ein Verfahren zum Aufbereiten von kohlenwasserstoffhaltigen Produkten durch Pyrolysation, insbesondere zur Aufbereitung von Altreifen und/oder vergleichbaren Gummierzeugnissen sowie Kunststoffen und dergleichen.

Pyrolytische Verfahren zur Aufbereitung von kohlenwasserstoffhaltigen Produkten sind allgemein bekannt, mit denen aus Abfällen, Stoffen und Abprodukten wieder verwendbare Materialien bereitgestellt werden können.

Ein Verfahren und eine Anlage zum Pyrolysieren von kohlenwasserstoffhaltigen Abfallprodukten, insbesondere von Altreifen, ist mit der DE 198 34 596 C 1 bekannt geworden, bei dem das zu pyrolysierende Material in einen Pyrolyseofen eingebracht und bei 500 °C pyrolysiert wird. Dabei werden die zu behandelnden Altreifen ganzstückig über eine Aufnahmevorrichtung in einen Pyrolyseofen verbracht, wobei die Vorrichtung den Ofen gleichzeitig dicht abschließen soll.

Bei diesem Prozess wird bei Erreichen der vorgesehenen Pyrolysetemperatur das behandelte Ausgangsmaterial sofort aus dem Ofen entnommen und von Fremdstoffen wie Metall getrennt.

Mit dieser Verfahrensweise wird der eigentlich gewollte Prozess der Pyrolyse unterbrochen, was nachteilig auf die Pyrolyse selbst wirkt und aus energetischer Sicht nicht zu vertreten ist, da ein Teil der Abwärme ungenutzt bleibt und keiner Weiterverwendung zugeführt wird.

Ein weiteres Verfahren zum Pyrolysieren von kohlenwasserstoffhaltigen Produkten wurde mit der DE 103 09 530 A 1 bekannt, welches sich auf ein Industrieverfahren beziehen soll, bei dem die kohlenwasserstoffhaltigen Produkte, beispielsweise Altreifen, bei einer Temperatur von bis zu ca. 600 °C stufenweise mit in Abhängigkeit vom Ausgangsmaterial festgelegten Verweilzeiten bei bestimmten Temperaturen pyrolysiert werden. Hierbei wird zwar der Prozess der Pyrolyse abgeschlossen, für eine industrielle Anwendung ist dieses Verfahren jedoch ungeeignet, da die vorherrschenden hohen Temperaturen sich auch auf andere Inhaltsstoffe schädigend auswirken.

Vor diesem Hintergrund stellt sich die Erfindung die Aufgabe, ein Verfahren zum Aufbereiten von kohlenwasserstoffhaltigen Produkten, insbesondere von Altreifen und/oder vergleichbaren Gummierzeugnissen durch Pyrolysation zu entwickeln, mit dem im industriellen Maßstab die eingesetzten Produkte behandelt und die Reaktionsprodukte einer wirtschaftlichen Nutzung zugeführt werden können.

Erfindungsgemäß wird diese Aufgabe mit den Merkmalen des Anspruches 1 gelöst. Besondere Ausgestaltungen und vorteilhafte Lösungen sind in den Unteransprüchen angegeben.

In Erkenntnis dessen, dass es nicht mehr zeitgemäß ist, immer neue, unwiederbringliche Rohstoffe in diversen Industrieprozessen zu vergeuden, wenn die technischen Möglichkeiten bestehen, qualitativ gleichwertige Sekundärprodukte für diese Prozesse bereitzustellen, wurden gemäß der Erfindung ein Industrieverfahren zur wirtschaftlichen Aufspaltung von kohlenwasserstoffhaltigen Altmaterialien, beispielsweise von Altreifen geschaffen, um zum einen die Altprodukte aufzubereiten und zum anderen die innewohnenden Wertstoffe wie Pyrolyseöl, Kohlenstoff und in den Altreifen eingeschlossenen Stahl zurück zu gewinnen und diese aufgeschlossenen Wertstoffe einer Wiederverwendung zuzuführen.

Das vorgestellte Verfahren zur Aufbereitung von kohlenwasserstoffhaltigen Produkten ist ein Pyrolyseverfahren, welches als geschlossenes System im Niedrigtemperaturbereich drucklos arbeitet und infolge des geschlossenen Systems das Austreten von Schadstoffen in die Atmosphäre verhindert wird.

Das geschaffene Verfahren zeichnet sich dadurch aus, dass, nachdem die zu behandelnden kohlenwasserstoffhaltigen Abprodukte, das Input, in einen Reaktor verbracht und dieser in einen Thermoofen eingesetzt wurde, der Pyrolyseprozess derart abläuft, dass Stickstoff in das Innere des Reaktors eingeleitet wird, die Temperaturkurve während der Sauerstoffentfernung im Bereich von 80 bis 120 °C verläuft und dieser Vorgang über eine Zeitschiene von ca. 20 min. geführt wird.

Anschließend erfolgt eine Temperaturerhöhung im Thermoofen derart, dass sich im Reaktor eine Prozesstemperatur im Bereich von 360 bis 420 °C einstellt und dieser Prozesszustand über einen Zeitraum von 1 bis 2 h aufrechterhalten wird.

Danach erfolgt eine kurzzeitige Prozesstemperaturerhöhung auf 480 bis 600 °C für einen Zeitraum von 10 bis 60 min, um den Pyrolyseprozess innerhalb des Reaktors vollständig ablaufen zu lassen, ohne dass sich im Reaktor ungewollte Abprodukte absetzen können. Die während des Pyrolysevorganges gewonnenen Prozessgase werden aus dem Reaktor abgeleitet und einem Kühler mit Entspanner zugeführt.

Die nachfolgenden Verfahrensschritte beziehen sich zum einen auf die Behandlung des gewonnenen Pyrolysegases und zum anderen auf die Abforderung und Behandlung des im Reaktor sich herausgebildeten Kohlenstoffes.

Das in den Kühler eingeleitete Prozessgas wird abgekühlt und entspannt, so dass infolge der stattfindenden Kondensation ein Pyrolyseöl gewonnen wird, welches in einem nachfolgenden Verfahrensschritt durch Destillation, Zentrifugation oder Filtrierung einer Separation unterzogen wird. Je nach Weiterverwendung des gewonnenen Pyrolyseöles ist die Möglichkeit gegeben, dieses in einen Tagestank zur Zwischenlagerung mit anschließender Qualitätskontrolle einem Haupttank zuzuführen, von dem dann die Auslieferung zur weiteren Verwendung des Pyrolyseöles erfolgen kann.

Der andere parallel ablaufende Verfahrensschritt läuft nun so ab, dass nach einer kontrollierten Abkühlung des Reaktors dieser aus dem Thermoofen entnommen und geöffnet wird, um die in dem Reaktor befindlichen Abprodukte samt der Aufnahmevorrichtung für die Abprodukte, hier Altreifen, entnehmen zu können.

Anschließend erfolgt die Entleerung des Reaktors in bevorzugter Ausführung über das Absaugen des Reaktorinhaltes. Es schließt sich eine Abkühlung des Kohlenstoffes und eine Trennung von Kohlenstoff und den Metallrückständen an, wobei die beiden Abproduktrückstände getrennt gelagert werden, um von dort dann ihrer weiteren Verwendung zugeführt werden zu können.

Dabei ist es von besonderem Vorteil, wenn der Kohlenstoff noch einer Desodoration unterzogen wird, um dem Kohlenstoff die innewohnenden geruchsbelästigenden Bestandteile zu entziehen.

Die Erfindung wird nachstehend anhand eines Ausführungsbeispieles näher erläutert.

Die dazugehörige Zeichnung zeigt das Fließschema zur Demonstration des wesentlichen Verfahrensablaufes und zugehöriger Anlageteile.

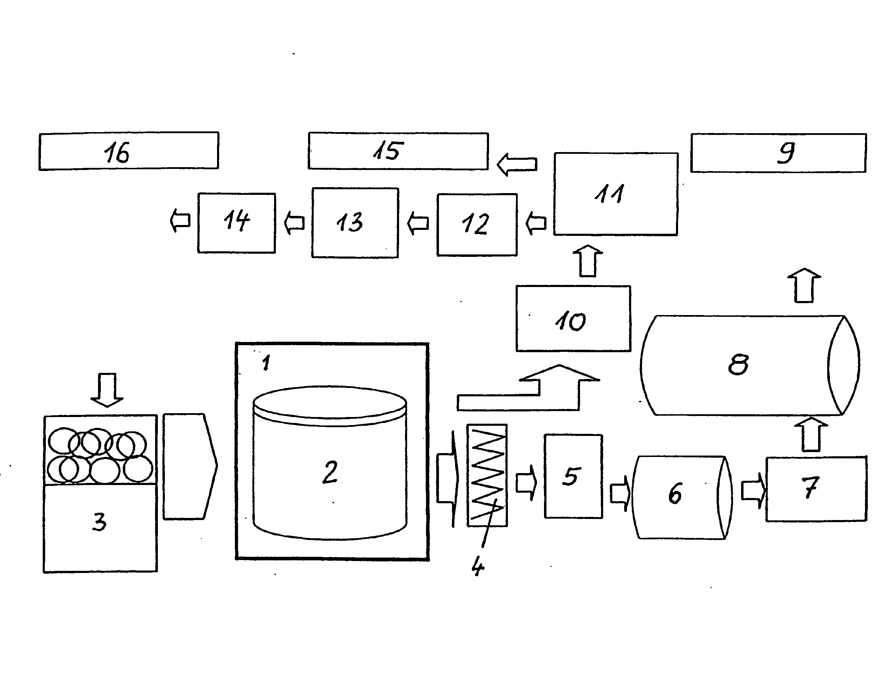

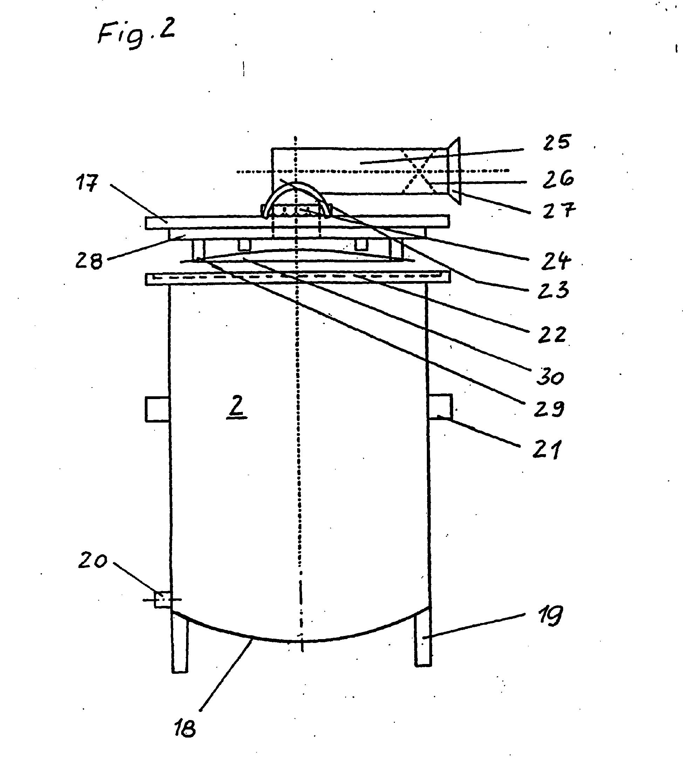

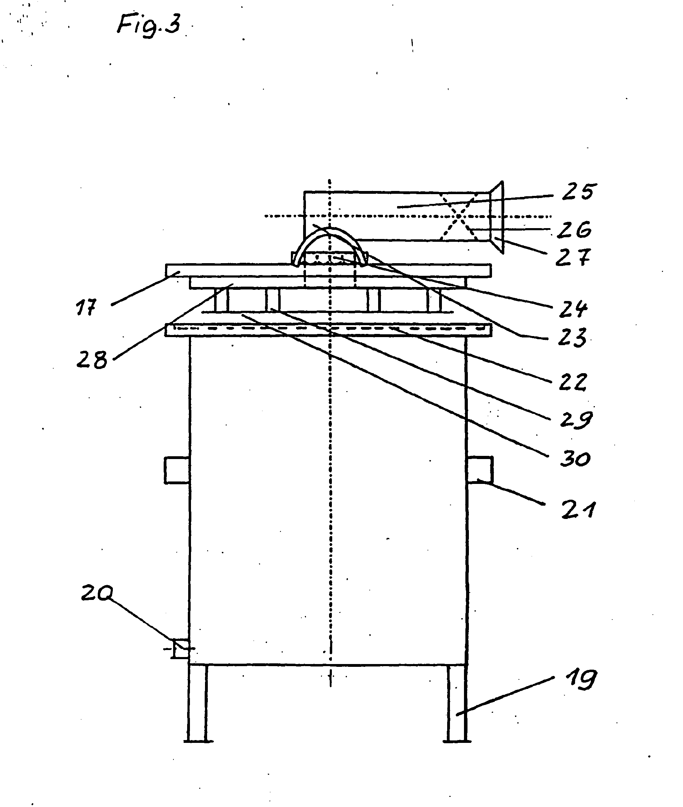

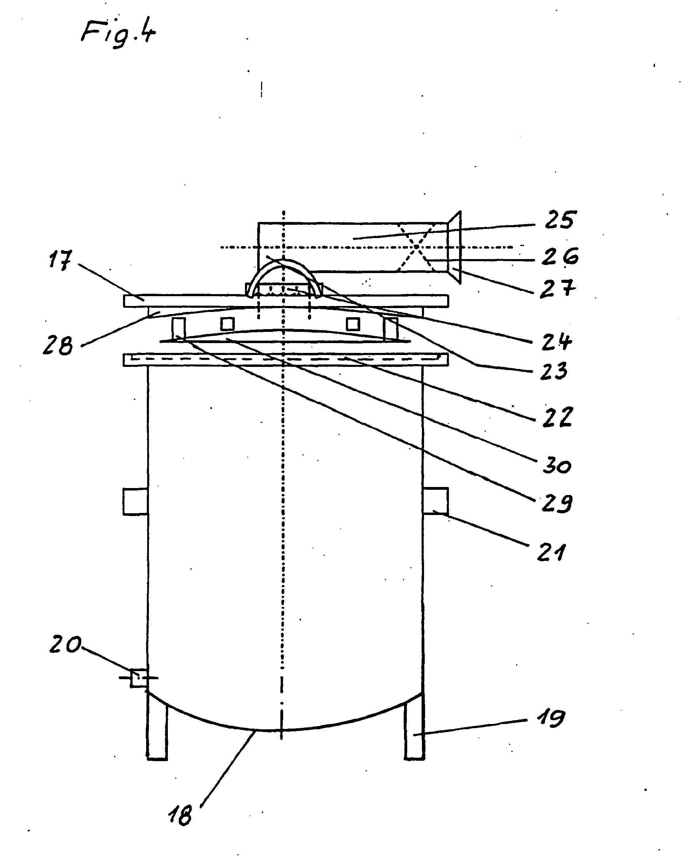

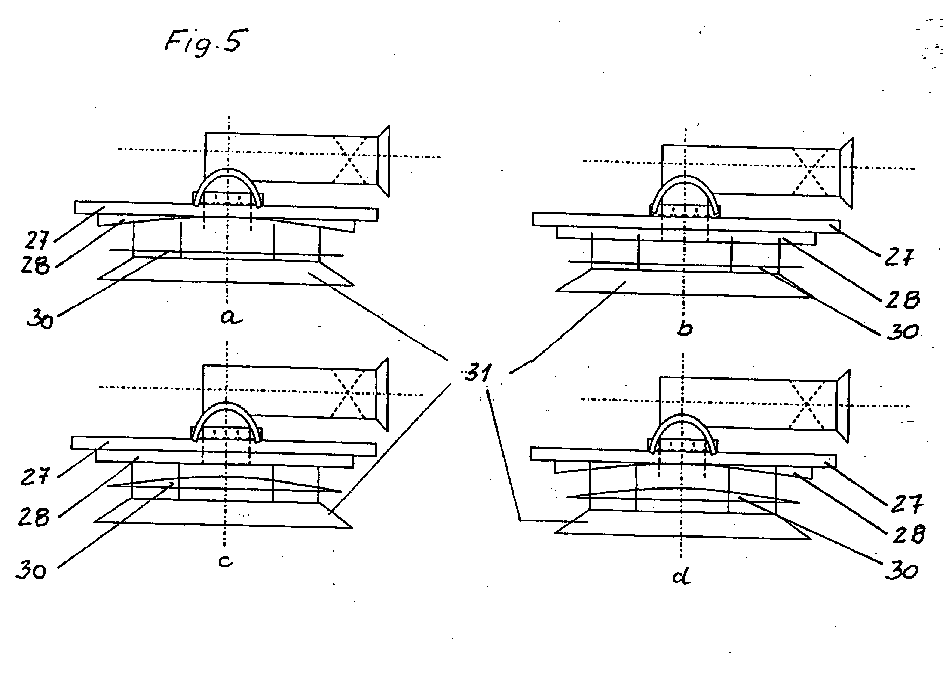

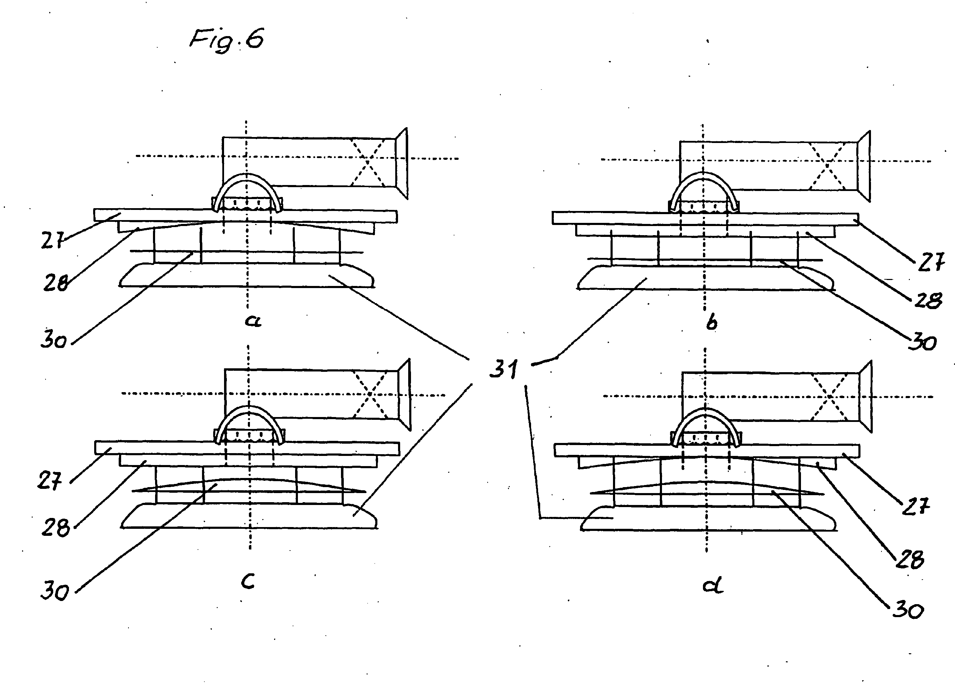

Das Fließschema nach Figur 1 zeigt den erfinderischen Verfahrensablauf mit zugehörigen Anlagekomponenten zur Aufbereitung von kohlenwasserstoffhaltigen Produkten am Beispiel von Altreifen, welche vorgelagert werden und vor ihrem Einsatz in den Reaktor 2 in Aufnahmevorrichtungen 3 verbracht werden, mittels denen die zu behandelnden Altreifen dann in den jeweiligen Reaktor 2 eingesetzt werden. Die Altreifen kommen so in den Reaktor 2, wie sie angeliefert werden, dass bedeutet, die Altreifen können sowohl mit Felgen als auch ohne Felgen in den Reaktor 2 verbracht werden, was sich nicht negativ auf den Prozessablauf auswirkt. Ist der Reaktor 2 mit den Altreifen bestückt, wird der Reaktor 2 luftdicht verschlossen, in den Thermoofen 1 verbracht, die notwendigen Verbindungen zu weiteren Funktionsmodulen der Anlage werden hergestellt. Der Thermoofen 1 wird verschlossen und auf Temperatur angefahren. Während dieser Phase wird der Reaktor 2 thermisch angefahren, dies erfolgt über einen Zeitraum von ca. 20 min bei einem Temperaturkurvenverlauf von 80 bis 120 °C, um das im Reaktor befindliche Wasser zu beseitigen. Gleichfalls während dieser Phase wird im unteren Bereich des Reaktors 2 Stickstoff in das Innere des Reaktors 2 eingeblasen, um den darin befindlichen Sauerstoff zu entfernen/zu beseitigen.

Im nächsten Prozessschritt wird der Thermoofen 1 auf Temperaturen im Bereich von 360 bis 420 °C hochgefahren, wodurch gleichfalls die Temperaturen im Reaktor 2 auf die Werte ansteigen und über einen Zeitraum von 1 bis 2 h gehalten werden, dem sich ein kurzzeitiges Hochfahren der Temperaturen auf 480 bis 600 °C anschließt, dieser Temperaturbereich über einen Zeitraum von ca. 10 bis 60 min gehalten, um die Pyrolyse vollständig ablaufen zu lassen.

Die beim Pyrolyseprozess frei gewordenen Pyrolysegase werden über eine Abgasleitung einem Kühl- und Entspannungsmodul 4 zugeführt, indem die Kondensation zu Pyrolyseöl stattfindet.

Im nachfolgenden Verfahrensschritt erfolgt die Separation des Pyrolyseöles in einem Separator 6 durch Destillation, Zentrifugation oder Filtrierung.

Das Pyrolyseöl wird sodann über einen Tagestank 6, für eine Zwischenlagerung ausgebildet, einer nachfolgenden Qualitätskontrolle 7 und danach zum Haupttank 8 verbracht und kann dann bei Bedarf über eine Abförderleitung zur Auslieferungsstation 9 geleitet werden.

Erfolgt die Separation des Pyrolyseöles durch Destillation, wird das Pyrolyseöl vor dem Verbringen in den Tagestank 6 bzw. in den Haupttank 8 vorsorglich heruntergekühlt.

Die Abförderung bzw. Entleerung der anderen bei der Pyrolyse erhaltenen Wertstoffe aus dem Reaktor 2 erfolgt derart, dass der jeweilige Reaktor 2 aus dem Thermoofen 1 entnommen wird, der Deckel 17 des Reaktors 2 wird geöffnet, somit können die darin befindlichen Wertstoffe wie Kohlenstoff und metallische Rückstände/Stahldraht abgefördert bzw. entnommen werden.

Im Fließschema nach Figur 1 werden diese Prozessschritte in dem als Entleerungsstation dargestellten Anlagenmodul 10 vollzogen, in dem gleichfalls auch eine Abkühlung der entnommenen Wertstoffe erfolgt, welche dann anschließend einer Separationseinheit 11 zuführt werden, in der die Trennung von Kohlenstoff und metallischen Bestandteilen erfolgt.

Die metallischen Rückstände werden zur Lagerung und Auslieferungsstation 15 verbracht, während der Kohlenstoff über eine Sortierstation 13 einer Verpackungsstation 14 zugeführt und im Anschluss daran zur Lager- und Auslieferstation 16 geführt wird. In vorteilhafter Ausführung ist zwischen der Separationseinheit 11 und der Sortierstation 13 eine Desodoration 12 vorgesehen, in der die dem Kohlenstoff anhaftenden geruchsbelästigenden Bestandteile entzogen werden.

## Patentansprüche

1. Verfahren zum Aufbereiten von kohlewasserstoffhaltigen Produkten, insbesondere von Altreifen, durch Niedrigtemperatur-Pyrolyse zwecks Gewinnung von Kohlenstoff, Pyrolyseöl, Restgas und metallischen Bestandteilen unter Verwendung von Reaktoren (2), die in einem Thermoofen (1) Aufnahme finden, **dadurch gekennzeichnet, dass**
nach dem Beschicken des Reaktors (2) dieser in einen Thermoofen (1) eingesetzt wird, der Reaktor (2) in einer ersten Stufe auf eine Temperatur im Bereich von 80 bis 120° C aufgeheizt wird, welche über einen Zeitraum von ca. 20 Minuten gehalten und in einer parallel ablaufenden zweiten Stufe in den Reaktor (2) Stickstoff eingeblasen wird, eine Feuchtigkeits- sowie eine Sauerstoffreduzierung im Reaktor (2) stattfindet, in den folgenden Prozessstufen eine weitere Temperaturerhöhung im Reaktor (2) auf einen Bereich von 360 bis 420° C über einen Zeitraum von 1 bis 2 Stunden erfolgt, in der nachfolgenden Verfahrensstufe eine kurzzeitige Prozesstemperaturerhöhung auf 480° C bis max. 600° C für einen Zeitraum von 10 bis 60 Minuten stattfindet, nach vollzogener Pyrolyse das Pyrolysegas aus dem Reaktor (2) abgeleitet und einem Kühl- und Entspannungsmodul (4) zugeführt wird, während der im Bodenbereich des Reaktors (2) abgesetzte Kohlenstoff abgesaugt und die metallischen Bestandteile aus dem Reaktor (2) entnommen werden.

2. Verfahren nach Anspruch 1, **dadurch gekennzeichnet, dass**
die während der Pyrolyse freigesetzten und im Reaktor (2) aufsteigenden und schwebenden Materialpartikel in kontrollierter Weise innerhalb des Reaktors (2) umgewälzt und in den ablaufenden Prozesskreislauf der Pyrolyse eingebunden werden.

3. Verfahren nach einem der Ansprüche 1 und 2, **dadurch gekennzeichnet, dass**
die Heißluftzufuhr zum Thermoofen (1) und die Temperaturen im Reaktor (2) geregelt, vorzugsweise elektronisch gesteuert, werden und die Temperaturführung des Thermoofens (1) sowie des Reaktors (2) über Thermostate erfolgt.

4. Verfahren nach einem der Ansprüche 1 bis 3, **dadurch gekennzeichnet, dass**
das Pyrolysegas aus dem Reaktor (2) über eine Abgasleitung (25) abgefördert wird.

5. Verfahren nach einem der Ansprüche 1 bis 4, **dadurch gekennzeichnet, dass**
die zu behandelnden Altreifen in gestapelter Form mittels Aufnahmevorrichtungen im jeweiligen Reaktor (2) eingesetzt und aus diesem entnommen werden.

## Claims

1. Procedure for preparation of products containing hydrocarbons, in particular old tyres, by low-temperature pyrolysis for generation of carbon, pyrolysis oil, residual gas and metal components using reactors (2) inserted into a thermal furnace (1) and **characterised in that**
after supplying, the reactor (2) is inserted into a thermal furnace (1), and the reactor (2) is heated in the first stage to a temperature in the range of 80 to 120° C, which is maintained for a period of approx. 20 minutes and nitrogen is blown into the reactor (2) in a parallel second stage, causing humidity and oxygen reduction in the reactor (2), followed by process stages with another temperature increase in the reactor (2) to the range of 360 to 420° C for a period of 1 to 2 hours, followed by a process stage with a short-term temperature increase to 480° C to max. 600° C for a period of 10 to 60 minutes, and the pyrolysis gas being discharged from the reactor (2) after completed pyrolysis and supplied to a cooling and relief module (4) while the carbon collected at the bottom area of the reactor (2) is vacuumed off and the metal components are removed from the reactor (2).

2. Procedure according to claim 1, **characterised in that**
the metal particles released during pyrolysis and rising and suspended in the reactor (2) are reciculated in a controlled fashion inside the reactor (2) and integrated into the progress of the pyrolysis process.

3. Procedure according to one of the claims 1 and 2, **characterised in that**
the hot-air supply to the thermal furnace (1) and the temperatures in the reactor (2) are controlled, preferably electronically, and temperature control of the thermal furnace (1) and the reactor (2) is performed via thermostats.

4. Procedure according to one of the claims 1 to 3, **characterised in that**
the pyrolysis gas from the reactor (2) is removed through an exhaust line (25).

5. Procedure according to one of the claims 1 to 4, **characterised in that**
the old tyres to be treated are inserted into and removed from the respective reactor (2) stacked using a receptacle.

## Revendications

1. Procédé permettant de préparer les produits hydrocarbonés, en particulier les pneus usagés, au moyen d'une pyrolyse à basse température en vue d'une extraction de carbone, d'huile de pyrolyse, de gaz résiduel et de composants métalliques en utilisant des réacteurs (2) qui sont logés dans un four thermique (1), **caractérisé par le fait**
**que** le réacteur (2) est utilisé dans un four thermique (1) après le chargement de celui-ci, que le réacteur (2) est réchauffé, au cours d'une première phase, à une température comprise entre 80 et 120° C, maintenue pendant une durée de 20 minutes environ et que de l'azote est insufflé dans le réacteur (2) pendant une deuxième phase se déroulant parallèlement, qu'une diminution de l'humidité ainsi que de l'oxygène intervient dans le réacteur (2), qu'une autre augmentation de la température survient, au cours des phases de processus suivantes, dans le réacteur (2) dans une plage comprise entre 360 et 420° C pendant une durée de 1 à 2 heures, qu'une brève augmentation de la température de processus de 480° C à max. 600° C intervient dans la phase du procédé suivante pendant une durée de 10 à 60 minutes, que le gaz de pyrolyse est dérivé du réacteur (2) après réalisation d'une pyrolyse et acheminé vers un module de refroidissement et de détente (4), pendant que le carbone déposé au fond du réacteur (2) est aspiré et que les composants métalliques sont prélevés du réacteur (2).

2. Procédé conformément à la revendication n° 1, **caractérisé par le fait**
**que** les particules de matière libérées pendant la pyrolyse, montantes et en suspension dans le réacteur (2), sont circulées de façon contrôlée à l'intérieur du réacteur (2) et sont intégrées dans le circuit de processus de la pyrolyse.

3. Procédé conformément à l'une des revendications n° 1 et n° 2, **caractérisé par le fait**
**que** l'apport en air chaud vers le four thermique (1) et les températures régnant dans le réacteur (2) sont régulés, de préférence par commande électronique, et que la gestion de la température du four thermique (1) ainsi que du réacteur (2) s'effectue par des thermostats.

4. Procédé conformément à l'une des revendications n°1 à n°3, **caractérisé par le fait**
**que** le gaz de pyrolyse est extrait du réacteur (2) au moyen d'un conduit de gaz d'échappement (25).

5. Procédé conformément à l'une des revendications n°1 à n°4, **caractérisé par le fait**
**que** les pneus usagés à traiter sous forme empilée sont introduits au moyen d'un dispositif de réception dans le réacteur correspondant (2) et sont prélevés de celui-ci.
